# EUROPEAN PATENT APPLICATION

(11) **EP 4 749 731 A1**
(43) Date of publication of application: **27.05.2026**
(21) Application number: 24862795.2
(22) Date of filing: 03.09.2024
(51) Int. Cl.: H01M 10/04, H01G 11/22, H01G 11/66, H01G 11/78, H01M 4/64, H01M 10/0585, H01M 50/103, H01M 50/184

(54) **POWER STORAGE MODULE**

(30) Priority: 06.09.2023 JP 2023144385
(71) Applicant: KABUSHIKI KAISHA TOYOTA JIDOSHOKKI, Kariya-shi, Aichi 448-8671 (JP)
(72) Inventor: SAKAMOTO Shunya, Kariya-shi, Aichi 448-8671 (JP); ISHIGURO Fumihiko, Kariya-shi, Aichi 448-8671 (JP); HIROSE Takayuki, Kariya-shi, Aichi 448-8671 (JP); OTAKE Masanari, Kariya-shi, Aichi 448-8671 (JP); NATSUI Keisuke, Kariya-shi, Aichi 448-8671 (JP); NAKAMURA Tomohiro, Kariya-shi, Aichi 448-8671 (JP)
(74) Representative: TBK
(86) International application number: PCT/JP2024/031624
(87) International publication number: WO 2025/053143

(57) **Abstract**

This power storage module includes: an electrode laminate in which a plurality of electrodes including a plurality of bipolar electrodes are laminated along a first direction; and a sealing body that is provided in the electrode laminate and that seals the electrode laminate, wherein each of the plurality of bipolar electrodes includes: a current collector including a first surface intersecting the first direction and a second surface on a side opposite to the first surface; a first active material layer provided on the first surface; and a second active material layer provided on the second surface and having a polarity different from that of the first active material layer, and wherein the sealing body includes a plurality of sealing materials laminated along the first direction, and a plurality of spacers interposed between the sealing materials adjacent to each other along the first direction.

## Description

### Technical Field

The present disclosure relates to a power storage module.

### Background Art

Patent Literature 1 describes a bipolar battery. This bipolar battery includes: a bipolar electrode in which a positive electrode active material layer is provided on one surface of one current collector and a negative electrode active material layer is provided on the other surface; a gel electrolyte sandwiched between the positive electrode active material layer and the negative electrode active material layer; and a seal layer provided between the current collectors and surrounding a periphery of a unit cell constituted by the positive electrode active material layer, the negative electrode active material layer, and the gel electrolyte, and has a structure in which a plurality of the unit cells are laminated.

### Citation List

### Patent Literature

[Patent Literature 1] Japanese Unexamined Patent Publication No. 2004-158343

### Summary of Invention

### Technical Problem

In the bipolar battery described in Patent Literature 1 above, in the current collector, a region in which neither an active material layer nor a seal layer is provided occurs between a region in which the positive electrode active material layer and the negative electrode active material layer are provided and a region in which the seal layer is provided. This region in which neither the active material layer nor the seal layer is provided has lower rigidity than other regions. Therefore, there is a possibility that deformation may occur in the current collector in the region having low rigidity.

An object of the present disclosure is to provide a power storage module capable of suppressing deformation of a current collector.

### Solution to Problem

A power storage module according to the present disclosure comprises: an electrode laminate in which a plurality of electrodes including a plurality of bipolar electrodes are laminated along a first direction; and a sealing body that is provided in the electrode laminate and that seals the electrode laminate, wherein each of the plurality of bipolar electrodes includes: a current collector including a first surface intersecting the first direction and a second surface on a side opposite to the first surface; a first active material layer provided on the first surface; and a second active material layer provided on the second surface and having a polarity different from that of the first active material layer, wherein the sealing body includes: a plurality of sealing materials laminated along the first direction; and a plurality of spacers interposed between the sealing materials adjacent to each other along the first direction, wherein each of the plurality of sealing materials is formed in a frame shape along an outer shape of the current collector when viewed from the first direction, and is welded to the first surface and the second surface at a peripheral portion of the current collector, wherein each of the plurality of spacers is formed in a frame shape along the outer shape of the current collector when viewed from the first direction, and forms an internal space between the current collectors adjacent to each other in the first direction together with the sealing materials adjacent to each other along the first direction, wherein, when viewed from the first direction, an outer edge of the first active material layer is positioned outside an outer edge of the second active material layer, and wherein the spacer, when viewed from the first direction, has its inner edge positioned between the outer edge of the first active material layer and the outer edge of the second active material layer.

This power storage module includes an electrode laminate in which a plurality of electrodes including a plurality of laminated bipolar electrodes are laminated. The bipolar electrode includes a current collector, and a first active material layer and a second active material layer provided on both surfaces of the current collector, respectively. When viewed from a lamination direction of the electrodes (the first direction), the outer edge of the first active material layer is positioned outside the outer edge of the second active material layer. Further, in this power storage module, a sealing body is provided for the electrode laminate. The sealing body includes: a plurality of sealing materials that are welded to the current collector at a peripheral portion of the current collector of the bipolar electrode and are laminated in a lamination direction of the bipolar electrodes (the first direction); and a plurality of spacers interposed between the sealing materials and forming an internal space between the current collectors. The spacer is configured such that, when viewed from the lamination direction of the electrodes, the inner edge of the spacer is positioned between the outer edge of the first active material layer and the outer edge of the second active material layer. In other words, the spacer extends from a position between adjacent sealing materials to over the first active material layer. Therefore, the spacer is disposed in a region of the current collector in which neither the active material layer nor the sealing material is provided, and rigidity is secured for the power storage module. Therefore, deformation of the current collector is suppressed.

In the power storage module according to the present disclosure, the spacer may include an overlapping portion that overlaps the first active material layer when viewed from the first direction, and may be made thinner than the second active material layer in the overlapping portion.

In the power storage module according to the present disclosure, the spacer may include an overlapping portion that overlaps the first active material layer when viewed from the first direction, the plurality of electrodes may include a first terminal electrode that is positioned at an outermost part of the electrode laminate in the first direction and that includes the current collector and the second active material layer provided on the second surface, and an outermost spacer of the plurality of spacers in the first direction may be in contact with the current collector of the first terminal electrode in the overlapping portion.

In the power storage module according to the present disclosure, the spacer may be sandwiched between a pair of first active material layers adjacent to each other along the first direction in the overlapping portion.

In the power storage module according to the present disclosure, the first active material layer may include: a first portion that overlaps the second active material layer when viewed from the first direction; and a second portion that is positioned outside the outer edge of the second active material layer when viewed from the first direction and that includes the outer edge of the first active material layer, and a thickness of the second portion in the first direction may be greater than a thickness of the first portion in the first direction.

In the power storage module according to the present disclosure, an outer edge portion of the sealing material and an outer edge portion of the spacer may be welded to each other to constitute a welded portion.

In the power storage module according to the present disclosure, the current collector may include: a first region that does not overlap the first active material layer and the sealing material when viewed from the first direction; and a second region that overlaps the first active material layer when viewed from the first direction and does not overlap the second active material layer, and a width of the first region when viewed from the first direction may be narrower than a width of the second region when viewed from the first direction.

In the power storage module according to the present disclosure, the electrode laminate may include: a first laminated portion in which the first active material layer and the second active material layer overlap when viewed from the first direction; and a second laminated portion that is outside the second active material layer when viewed from the first direction and in which the first active material layer and the spacer overlap, the sealing body may include a first sealing portion in which the sealing material and the spacer overlap when viewed from the first direction, a thickness of the second laminated portion in the first direction may be smaller than a thickness of the first laminated portion in the first direction, and a thickness of the first sealing portion in the first direction may be smaller than the thickness of the second laminated portion in the first direction.

In the power storage module according to the present disclosure, the spacer may include a protruding portion that protrudes toward the first surface side facing the spacer between the outer edge of the first active material layer and an inner edge of the sealing material when viewed from the first direction.

In the power storage module according to the present disclosure, the spacer may have a rectangular frame shape when viewed from the first direction, the current collector may have, on the second surface, when viewed from the first direction, a rectangular first region in which the second active material layer is provided, and a rectangular frame-shaped second region that is outside the first region, an outer edge of the rectangular first region may be defined by a pair of first sides facing each other and second sides connecting the pair of first sides and facing each other, when the spacer is divided, when viewed from the first direction, by first dividing lines extending the pair of first sides and second dividing lines extending the pair of second sides, the spacer may be divided into: a pair of first sections partitioned by the first dividing lines and along the pair of second sides; a pair of second sections partitioned by the second dividing lines and along the first sides; and four third sections partitioned by the first dividing lines and the second dividing lines, connecting the first sections and the second sections, and including four corner portions of the spacer, and at least one of the plurality of spacers may include, in at least one third section, a notch-shaped portion formed such that a width direction length of the spacer from an outer edge of the spacer to the internal space is shorter than the width direction length of the spacer in an adjacent first section or second section.

### Advantageous Effects of Invention

According to the present disclosure, it is possible to provide a power storage module capable of suppressing deformation of a current collector.

### Brief Description of Drawings

FIG. 1 is a schematic cross-sectional view of a power storage module according to the present embodiment.
FIG. 2 is a schematic plan view of the power storage module shown in FIG. 1.
FIG. 3 is a schematic cross-sectional view showing an enlarged part of the power storage module shown in FIG. 1.
FIG. 4 is a schematic cross-sectional view showing an enlarged part of a power storage module according to a first modified example.
FIG. 5 is a schematic cross-sectional view showing an enlarged part of a power storage module according to a second modified example.
FIG. 6 is a schematic cross-sectional view showing an enlarged part of a power storage module according to a third modified example.
FIG. 7 is a schematic cross-sectional view showing an enlarged part of a power storage module according to a fourth modified example.
FIG. 8 is a schematic plan view of a first aspect of the power storage module shown in FIG. 7.
FIG. 9 is a schematic plan view of a second aspect of the power storage module shown in FIG. 7.
FIG. 10 is a schematic plan view of a third aspect of the power storage module shown in FIG. 7.
FIG. 11 is a schematic plan view of a power storage module 1 according to another modified example.

### Description of Embodiments

Hereinafter, a power storage module according to one embodiment will be described with reference to the drawings. In the description of each drawing, the same or corresponding elements are denoted by the same reference numerals, and redundant description may be omitted. Further, in each drawing, an orthogonal coordinate system may be shown that defines an X direction, a Y direction orthogonal to the X direction, and a Z direction orthogonal to the X direction and the Y direction.

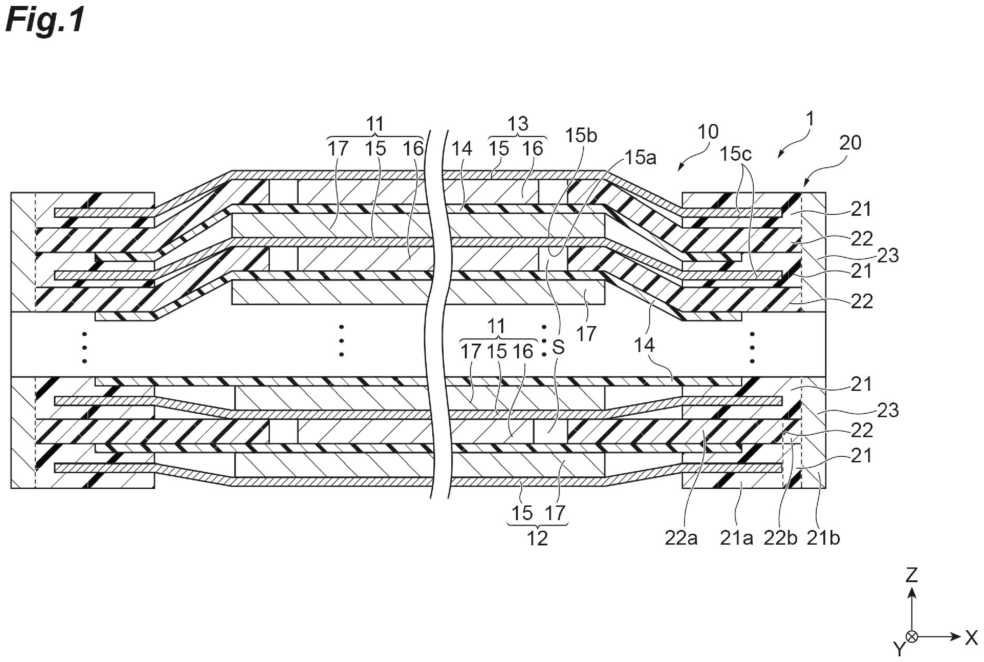

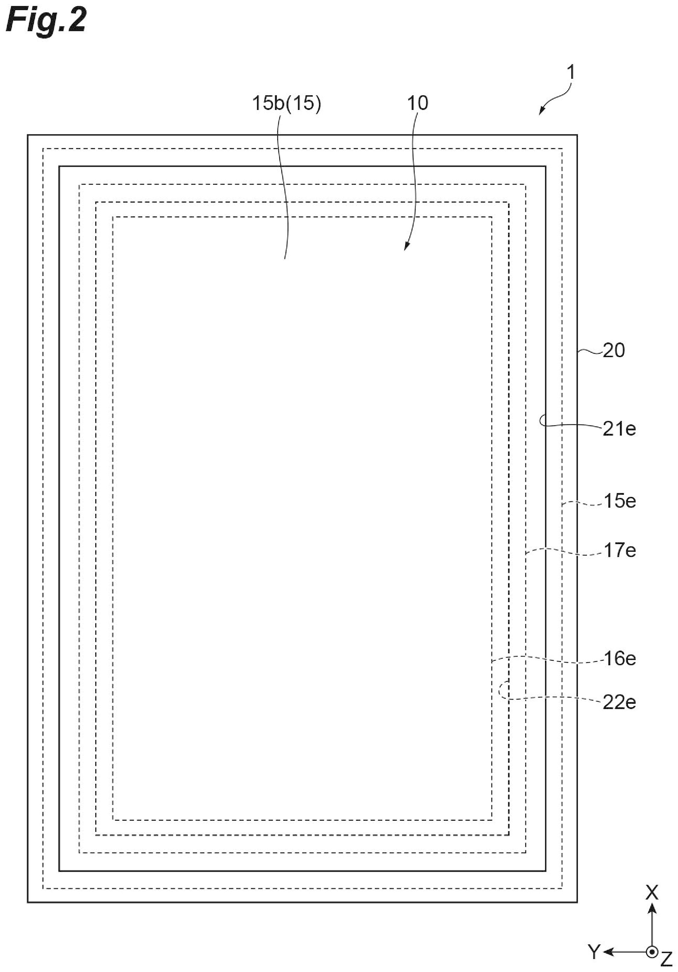

FIG. 1 is a schematic cross-sectional view of a power storage module according to the present embodiment. FIG. 2 is a schematic plan view of the power storage module shown in FIG. 1. A power storage module 1 shown in FIGS. 1 and 2 is, for example, a power storage module used in batteries of various vehicles such as forklifts, hybrid vehicles, and electric vehicles. The power storage module 1 is, for example, a secondary battery such as a nickel-metal hydride secondary battery or a lithium-ion secondary battery. The power storage module 1 may be an electric double layer capacitor or an all-solid-state battery. Here, a case where the power storage module 1 is a lithium-ion secondary battery is exemplified.

The power storage module 1 includes an electrode laminate 10 and a sealing body 20. The electrode laminate 10 includes a plurality of electrodes laminated along the Z direction (first direction). The plurality of electrodes include a plurality of bipolar electrodes 11, a negative electrode terminal electrode 12, and a positive electrode terminal electrode 13. A separator 14 is interposed between the electrodes adjacent to each other.

The bipolar electrode 11 includes a current collector 15, a positive electrode active material layer 16 (second active material layer), and a negative electrode active material layer 17 (first active material layer). The current collector 15 has, for example, a rectangular sheet shape. The current collector 15 includes one surface 15a and the other surface 15b. As one example, the other surface 15b is a first surface intersecting the Z direction, and the one surface 15a is a second surface that intersects the Z direction and that is on a side opposite to the first surface. Here, the one surface 15a of the current collector 15 is a surface facing one side in the Z direction (a direction from the positive electrode terminal electrode 13 toward the negative electrode terminal electrode 12 in FIG. 1), and the other surface 15b of the current collector 15 is a surface facing the other side in the Z direction (a direction from the negative electrode terminal electrode 12 toward the positive electrode terminal electrode 13 in FIG. 1).

The positive electrode active material layer 16 (second active material layer) is provided on the one surface 15a (second surface) of the current collector 15. The negative electrode active material layer 17 (first active material layer) is provided on the other surface 15b (first surface) of the current collector 15. The plurality of bipolar electrodes 11 are laminated such that the positive electrode active material layer 16 of one bipolar electrode 11 and the negative electrode active material layer 17 of another bipolar electrode 11 face each other. Grooves may be formed in the positive electrode active material layer 16 and the negative electrode active material layer 17.

The positive electrode active material layer 16 and the negative electrode active material layer 17 have a rectangular shape when viewed from the Z direction. The negative electrode active material layer 17 is slightly larger than the positive electrode active material layer 16 when viewed from the Z direction. That is, in a plan view when viewed from the Z direction, the entire formation region of the positive electrode active material layer 16 is positioned within the formation region of the negative electrode active material layer 17. In other words, when viewed from the Z direction, an outer edge 17e of the negative electrode active material layer 17 is positioned outside an outer edge 16e of the positive electrode active material layer 16.

The negative electrode terminal electrode 12 (second terminal electrode) includes the current collector 15 and the negative electrode active material layer 17 provided on the other surface 15b of the current collector 15. The negative electrode terminal electrode 12 does not have the positive electrode active material layer 16 and the negative electrode active material layer 17 on the one surface 15a of the current collector 15. That is, no active material layer is provided on the one surface 15a of the current collector 15 of the negative electrode terminal electrode 12. The negative electrode terminal electrode 12 is positioned at an outermost part of the electrode laminate 10 in the opposite direction of the Z direction (Z negative direction), and is laminated on the bipolar electrode 11. The negative electrode terminal electrode 12 is laminated on the bipolar electrode 11 such that its negative electrode active material layer 17 faces the positive electrode active material layer 16 of the bipolar electrode 11.

The positive electrode terminal electrode 13 (first terminal electrode) includes the current collector 15 and the positive electrode active material layer 16 provided on the one surface 15a of the current collector 15. The positive electrode terminal electrode 13 does not have the positive electrode active material layer 16 and the negative electrode active material layer 17 on the other surface 15b, which is a surface opposite to the one surface 15a of the current collector 15. That is, no active material layer is provided on the other surface 15b of the current collector 15 of the positive electrode terminal electrode 13. The positive electrode terminal electrode 13 is positioned at an outermost part of the electrode laminate 10 in the Z direction, and is laminated on the bipolar electrode 11. The positive electrode terminal electrode 13 is laminated on the bipolar electrode 11 such that its positive electrode active material layer 16 faces the negative electrode active material layer 17 of the bipolar electrode 11.

In the present embodiment, the current collectors of the bipolar electrode 11, the negative electrode terminal electrode 12, and the positive electrode terminal electrode 13 are given the same reference numeral as the current collector 15, but the current collectors of the bipolar electrode 11, the negative electrode terminal electrode 12, and the positive electrode terminal electrode 13 may be the same as each other or may be different from each other. Further, the surface on which the negative electrode active material layer 17 is not provided in the negative electrode terminal electrode 12 and the surface on which the positive electrode active material layer 16 is not provided in the positive electrode terminal electrode 13 do not contact the electrolytic solution because they contact, for example, a tab or the like for extracting current.

The separator 14 is disposed between the adjacent bipolar electrodes 11, between the negative electrode terminal electrode 12 and the bipolar electrode 11, and between the positive electrode terminal electrode 13 and the bipolar electrode 11. The separator 14 is interposed between the positive electrode active material layer 16 and the negative electrode active material layer 17. The separator 14 is a member that allows charge carriers such as lithium ions to pass through, and prevents short circuits due to contact between adjacent electrodes by separating the positive electrode active material layer 16 and the negative electrode active material layer 17.

The current collector 15 is a chemically inert electric conductor for continuing to pass current through the positive electrode active material layer 16 and the negative electrode active material layer 17 during discharge or charge of the lithium-ion secondary battery. The material of the current collector 15 is, for example, a metal material, a conductive resin material, a conductive inorganic material, or the like. Examples of the conductive resin material include a conductive polymer material, a resin in which a conductive filler is added to a non-conductive polymer material as necessary, and the like. The current collector 15 may include a plurality of layers. In this case, each layer of the current collector 15 may contain the above-described metal material and/or conductive resin material.

A coating layer may be formed on a surface of the current collector 15. The coating layer may be formed by a known method such as plating treatment or spray coating. The current collector 15 may have, for example, a plate shape, a foil shape (for example, a metal foil), a film shape, a mesh shape, or the like. Examples of the metal foil include aluminum foil, copper foil, nickel foil, titanium foil, stainless steel foil, and the like. The current collector 15 may be an alloy foil of the above-described metals or a foil in which a plurality of metal foils are integrated. When the current collector 15 has a foil shape, the thickness of the current collector 15 may be, for example, 1 µm to 200 µm. In the present embodiment, the current collector 15 is a foil in which aluminum foil and copper foil are integrated, or an aluminum foil having copper vapor-deposited thereon.

The positive electrode active material layer 16 contains a positive electrode active material capable of occluding and releasing charge carriers such as lithium ions. Examples of the positive electrode active material include lithium composite metal oxides having a layered rock salt structure, metal oxides having a spinel structure, polyanion-based compounds, and the like. The positive electrode active material may be any material usable in a lithium-ion secondary battery. The positive electrode active material layer 16 may contain a plurality of positive electrode active materials. In the present embodiment, the positive electrode active material layer 16 contains olivine-type lithium iron phosphate (LiFePO₄) as a composite oxide.

The negative electrode active material layer 17 contains a negative electrode active material capable of occluding and releasing charge carriers such as lithium ions. The negative electrode active material may be any of a simple substance, an alloy, or a compound. Examples of the negative electrode active material include Li, carbon, metal compounds, and the like. The negative electrode active material may be an element capable of alloying with lithium or a compound thereof. Examples of carbon include natural graphite, artificial graphite, hard carbon (non-graphitizable carbon), soft carbon (graphitizable carbon), and the like. Examples of artificial graphite include highly oriented graphite, mesocarbon microbeads, and the like. Examples of elements capable of alloying with lithium include silicon or tin. In the present embodiment, the negative electrode active material layer 17 contains graphite as a carbon-based material.

Each of the positive electrode active material layer 16 and the negative electrode active material layer 17 (hereinafter sometimes simply referred to as "active material layer") may further contain, as necessary, a conductive auxiliary agent for enhancing electric conductivity, a binder, an electrolyte (polymer matrix, ion-conductive polymer, electrolytic solution, etc.), an electrolyte support salt (lithium salt) for enhancing ion conductivity, and the like. The conductive auxiliary agent is added to increase the conductivity of each electrode (the bipolar electrode 11, the negative electrode terminal electrode 12, and the positive electrode terminal electrode 13). The conductive auxiliary agent is, for example, acetylene black, carbon black, graphite, or the like.

Examples of the binder include fluorine-containing resins such as polyvinylidene fluoride, polytetrafluoroethylene, and fluororubber; thermoplastic resins such as polypropylene and polyethylene; imide-based resins such as polyimide and polyamideimide; alkoxysilyl group-containing resins; acrylic resins such as acrylic acid or methacrylic acid; styrene-butadiene rubber (SBR); carboxymethylcellulose; alginates such as sodium alginate and ammonium alginate; water-soluble cellulose ester crosslinked products; and starch-acrylic acid graft polymers. These binders may be used alone or in combination. For the solvent of the binder, for example, water, N-methyl-2-pyrrolidone (NMP), or the like is used.

The separator 14 may be, for example, a porous sheet or a nonwoven fabric containing a polymer that absorbs and retains an electrolyte. Examples of the material of the separator 14 include polypropylene, polyethylene, polyolefin, polyester, and the like. The separator 14 may have a single-layer structure or a multi-layer structure. The multi-layer structure may include, for example, a ceramic layer as an adhesive layer or a heat-resistant layer. The separator 14 may be impregnated with an electrolyte. The electrolyte impregnated in the separator 14 is a liquid electrolyte (electrolytic solution) containing a non-aqueous solvent and an electrolyte salt dissolved in the non-aqueous solvent.

As the electrolyte salt of the electrolytic solution, known lithium salts such as LiClO₄, LiAsF₆, LiPF₆, LiBF₄, LiCF₃SO₃, LiN(FSO₂)₂, and LiN(CF₃SO₂)₂ may be used. Further, as the non-aqueous solvent, known solvents such as cyclic carbonates, cyclic esters, chain carbonates, chain esters, and ethers may be used. Two or more of these known solvent materials may be used in combination.

The sealing body 20 is provided in the electrode laminate 10 so as to surround the electrode laminate 10 when viewed from the Z direction, and is formed in a rectangular tubular shape at a peripheral portion of the electrode laminate 10. The sealing body 20 can be joined (welded) to each of the one surface 15a and the other surface 15b of the current collector 15 at a peripheral portion 15c of each current collector 15. The sealing body 20 is for forming an internal space S between the current collectors 15 adjacent to each other in the Z direction, and for sealing each of the internal spaces S (that is, the electrode laminate 10). An electrolyte (for example, an electrolytic solution) is accommodated in each internal space S. The sealing body 20 can suppress the electrolytic solution accommodated in the internal space S from flowing out to the outside. Further, the sealing body 20 can suppress intrusion of air, moisture, and the like from the outside of the electrode laminate 10 into the internal space S.

An edge portion of the separator 14 is joined to the sealing body 20. The sealing body 20 contains an insulating material. Examples of the material of the sealing body 20 include various resin materials such as polypropylene, polyethylene, polystyrene, ABS resin, acid-modified polypropylene, acid-modified polyethylene, and acrylonitrile styrene resin.

The sealing body 20 includes a plurality of sealing materials 21 made of resin and a plurality of spacers 22 made of resin. The sealing material 21 is provided on each of the current collectors 15. Therefore, the plurality of sealing materials 21 are laminated along the Z direction. The sealing material 21 has a frame shape (here, a rectangular frame shape) along the outer shape of the current collector 15 when viewed from the Z direction, and is provided at the peripheral portion 15c of the current collector 15. The sealing material 21 is provided so as to reach from the one surface 15a to the other surface 15b of the current collector 15 via an end surface, and covers the peripheral portion 15c.

That is, the sealing material 21 includes, on the one surface 15a and the other surface 15b of the current collector 15, an inner portion 21a that overlaps the current collector 15 when viewed from the Z direction, and an outer portion 21b that is positioned outside an edge of the current collector 15, respectively. A pair of portions of the sealing material 21 adjacent to each other with the current collector 15 interposed therebetween are connected to each other at the outer portion 21b. The inner portion 21a of the sealing material 21 is obtained by being welded to the one surface 15a and the other surface 15b of the current collector 15, respectively. In the present embodiment, the sealing material 21 is welded to both the one surface 15a and the other surface 15b of the current collector 15.

In the present embodiment, the sealing materials provided on the current collector 15 of the bipolar electrode 11, the current collector 15 of the negative electrode terminal electrode 12, and the current collector 15 of the positive electrode terminal electrode 13 are given the same reference numeral as the sealing material 21, but the sealing material provided on the current collector 15 of the bipolar electrode 11, the sealing material provided on the current collector 15 of the negative electrode terminal electrode 12, and the sealing material provided on the current collector 15 of the positive electrode terminal electrode 13 may be the same as each other or may be different from each other.

The spacer 22 is disposed so as to be interposed between each of the sealing materials 21 adjacent to each other in the Z direction. Thereby, the spacer 22 maintains a distance between the current collectors 15 adjacent to each other in the Z direction together with a pair of sealing materials 21 adjacent to each other in the Z direction. The internal space S is defined by a pair of current collectors 15 adjacent to each other in the Z direction, the spacer 22, and a pair of sealing materials 21 adjacent to the spacer 22. Thus, each of the plurality of spacers 22 forms the internal space S between the current collectors 15 adjacent to each other in the Z direction together with the sealing materials 21 adjacent to each other along the Z direction.

The spacer 22 has a frame shape (here, a rectangular frame shape) along the outer shape of the current collector 15 when viewed from the Z direction, and is disposed on the peripheral portion 15c of the current collector 15 when viewed from the Z direction. That is, the spacer 22 includes an inner portion 22a that overlaps the current collector 15 when viewed from the Z direction, and an outer portion 22b that is positioned outside an outer edge 15e of the current collector 15. The spacer 22 does not overlap the current collector 15 at the outer portion 22b when viewed from the Z direction. The inner portion 22a and the outer portion 22b each have a frame shape (here, a rectangular frame shape) when viewed from the Z direction.

An end portion of the separator 14 may be held by being sandwiched between the sealing material 21 and the spacer 22. The separator 14 can be fixed by having its end portion welded to at least one of the sealing material 21 and the spacer 22.

A part of a portion of the plurality of sealing materials 21 positioned outside the outer edge 15e of the current collector 15 (that is, an end portion of the outer portion 21b) and a part of the plurality of spacers 22 positioned outside the outer edge 15e of the current collector 15 (that is, an end portion of the outer portion 22b) are welded and integrated with each other to constitute a welded portion 23. That is, the sealing body 20 includes the welded portion 23 formed by welding and integrating the outer portions 21b of the plurality of sealing materials 21 and the outer portions 22b of the plurality of spacers 22 with each other. The welded portion 23 has a frame shape so as to surround the electrode laminate 10 when viewed from the Z direction, and constitutes an outer peripheral portion of the sealing body 20. Therefore, an outer side surface of the welded portion 23 forms an outer side surface of the sealing body 20. That is, in the present embodiment, the sealing body 20 has four outer side surfaces extending along the Z direction. The spacer 22 may not be welded to the sealing material 21 at least at the inner portion 21a of the sealing material 21 adjacent in the Z direction. Corner portions of the welded portion 23 may include chamfered portions by being subjected to chamfering processing such as micro-chamfering processing, C chamfering processing, and R chamfering processing.

A conductive member (not shown) is disposed by being laminated on each of a portion of the other surface 15b of the current collector 15 of the negative electrode terminal electrode 12 exposed from the sealing body 20 and a portion of the one surface 15a of the current collector 15 of the positive electrode terminal electrode 13 exposed from the sealing body 20 (that is, portions where the sealing material 21 is not provided when viewed from the Z direction). The conductive members are electrically connected to the current collector 15 of the negative electrode terminal electrode 12 and the current collector 15 of the positive electrode terminal electrode 13, respectively. The conductive members are interposed between the adjacent power storage modules 1, respectively, and function as terminals for extracting current from the power storage modules 1. The conductive members can be used to electrically connect the plurality of power storage modules 1. The plurality of power storage modules 1 may be arranged in series via the conductive members.

Further, the conductive member may also be used as a member for applying a restraint load to the electrode laminate 10. That is, when a restraint member (not shown) for restraining the power storage module 1 from the Z direction is disposed, a restraint load may be applied to the electrode laminate 10 via the conductive member. Further, a cooling flow path may be formed in the conductive member. The power storage module 1 can be cooled by allowing a cooling medium to flow through the cooling flow path formed in the conductive member. Further, a member (not shown) configured integrally with or separately from the conductive member may be disposed on both sides of the sealing body 20 in the Z direction, and a restraint load may be applied to the sealing body 20 via the member.

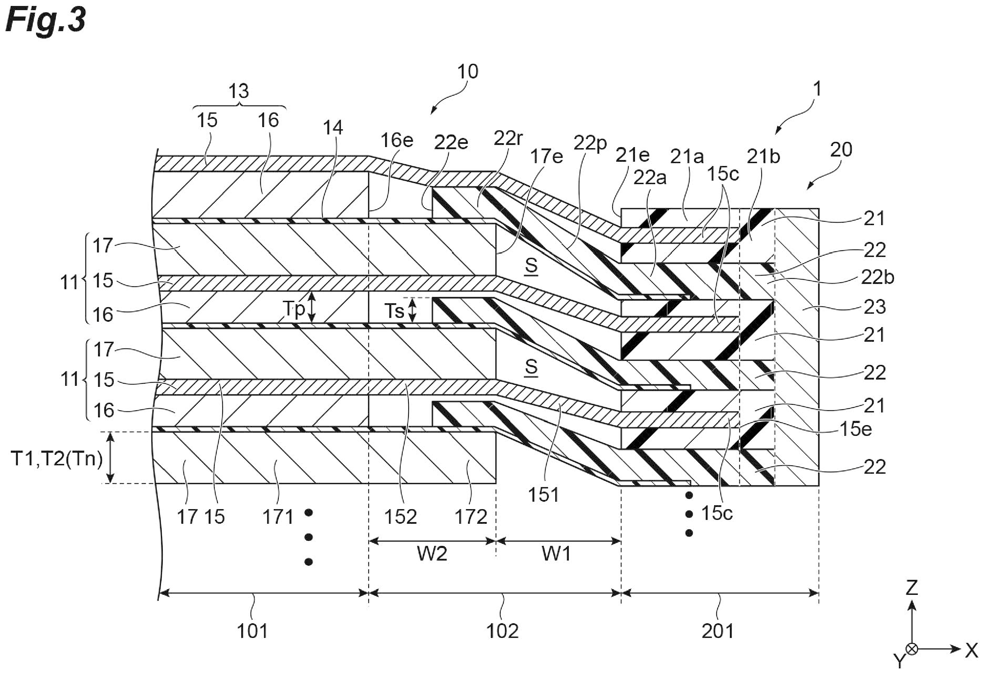

FIG. 3 is a schematic cross-sectional view showing an enlarged part of the power storage module shown in FIG. 1. In FIGS. 1 and 3, the separator 14 is provided between a surface of the spacer 22 on the negative electrode active material layer 17 side and the sealing material 21 facing the surface, but the separator 14 is not limited to this as long as insulation between the positive electrode active material layer 16 and the negative electrode active material layer 17 can be secured.

As shown in FIGS. 1 to 3, when viewed from the Z direction, an inner edge 22e of the spacer 22 (that is, a part of the inner portion 22a) is positioned between the outer edge 17e of the negative electrode active material layer 17 and the outer edge 16e of the positive electrode active material layer 16. Thereby, the spacer 22 includes an overlapping portion 22r that overlaps the negative electrode active material layer 17 when viewed from the Z direction, and a non-overlapping portion 22p that does not overlap the sealing material 21 and the negative electrode active material layer 17 when viewed from the Z direction.

Among the plurality of spacers 22, the outermost spacer 22 in the Z direction (here, the spacer 22 closest to the positive electrode terminal electrode 13 side) may be sandwiched between a pair of negative electrode active material layers 17 adjacent to each other along the Z direction via the separator 14 in the overlapping portion 22r. More specifically, the overlapping portion 22r of the outermost spacer 22 in the Z direction may contact the one surface 15a of the current collector 15 and the separator 14 facing the one surface 15a. In this case, the outermost spacer 22 in the Z direction may be joined (for example, welded) to the one surface 15a of the current collector 15 in the overlapping portion 22r.

Here, in the present embodiment, among the plurality of spacers 22, the spacers 22 other than the outermost spacer 22 in the Z direction (the spacers 22 in the intermediate portion) are configured not to contact the current collectors 15 of the adjacent bipolar electrodes 11 in the overlapping portion 22r. That is, a thickness Ts of the spacer 22 in the Z direction is made thinner than a thickness Tp of the positive electrode active material layer 16 in the Z direction. In other words, the internal space S is interposed between the spacer 22 in the intermediate portion and the one surface 15a of the current collector 15 of the bipolar electrode adjacent to the spacer 22. In the present embodiment, the thickness Ts in the overlapping portion 22r of the spacer 22 may be equal to a thickness of a portion of the spacer 22 that overlaps the sealing material 21 when viewed from the Z direction.

Further, the negative electrode active material layer 17 includes a rectangular first portion 171 that overlaps the positive electrode active material layer 16 when viewed from the Z direction, and a frame-shaped (here, a rectangular frame-shaped) second portion 172 that is positioned outside the outer edge 16e of the positive electrode active material layer 16 when viewed from the Z direction and that includes the outer edge 17e of the negative electrode active material layer 17. A thickness Tn of the negative electrode active material layer 17 in the Z direction may be constant between the first portion 171 and the second portion 172, or may be different. In the present embodiment, a thickness T1 of the first portion 171 in the Z direction and a thickness T2 of the second portion 172 in the Z direction are equal to each other.

Further, the current collector 15 includes a first region 151 that does not overlap the negative electrode active material layer 17 and the sealing material 21 when viewed from the Z direction, and a second region 152 that overlaps the negative electrode active material layer 17 when viewed from the Z direction and does not overlap the positive electrode active material layer 16. The first region 151 is a region between the outer edge 17e of the negative electrode active material layer 17 and an inner edge 21e of the sealing material 21. That is, the first region 151 coincides with the non-overlapping portion 22p of the spacer 22 when viewed from the Z direction.

The second region 152 is a region between the outer edge 16e of the positive electrode active material layer 16 and the outer edge 17e of the negative electrode active material layer 17. In the present embodiment, a width W1 of the first region 151 when viewed from the Z direction is made narrower than a width W2 of the second region 152 when viewed from the Z direction. As described above, since the spacer 22 includes the overlapping portion 22r, the spacer 22 is disposed between the current collectors 15 adjacent to each other in the Z direction in the first region 151.

Further, the electrode laminate 10 includes a first laminated portion 101 in which the negative electrode active material layer 17 and the positive electrode active material layer 16 overlap when viewed from the Z direction, and a second laminated portion 102 including a portion in which the negative electrode active material layer 17 and the spacer 22 (the overlapping portion 22r) overlap when viewed from the Z direction. The second laminated portion 102 coincides with a region obtained by combining the first region 151 and the second region 152 when viewed from the Z direction. The sealing body 20 includes a first sealing portion 201 in which the sealing material 21 and the spacer 22 overlap when viewed from the Z direction. The first sealing portion 201 does not overlap the overlapping portion 22r and the non-overlapping portion 22p of the spacer 22 when viewed from the Z direction. In the present embodiment, the thickness in the Z direction is thin in the order of the first laminated portion 101, the second laminated portion 102, and the first sealing portion 201. That is, the thickness of the second laminated portion 102 in the Z direction is smaller than the thickness of the first laminated portion 101 in the Z direction, and the thickness of the first sealing portion 201 in the Z direction is smaller than the thickness of the second laminated portion 102 in the Z direction.

As described above, the power storage module 1 according to the present embodiment includes the electrode laminate 10 in which a plurality of electrodes including the plurality of bipolar electrodes 11 are laminated along the Z direction. The electrodes each include the current collector 15 and the negative electrode active material layer 17 and the positive electrode active material layer 16 provided on both surfaces of the current collector 15, respectively. When viewed from the lamination direction of the electrodes (the first direction, here, the Z direction), the outer edge 17e of the negative electrode active material layer 17 is positioned outside the outer edge 16e of the positive electrode active material layer 16. Further, in the power storage module 1 according to the present embodiment, the sealing body 20 is provided for the electrode laminate 10. The sealing body 20 is welded to the current collector 15 at the peripheral portion 15c of the current collector 15 of the electrode, and includes: the plurality of sealing materials 21 laminated in the Z direction; and the plurality of spacers 22 interposed between the sealing materials 21 and forming the internal space S between the current collectors 15 together with the sealing materials 21.

The spacer 22 is configured such that, when viewed from the Z direction, the inner edge 22e of the spacer 22 is positioned between the outer edge 17e of the negative electrode active material layer 17 and the outer edge 16e of the positive electrode active material layer 16. In other words, the spacer 22 extends from a position between adjacent sealing materials 21 to over the negative electrode active material layer 17. Therefore, the spacer 22 is disposed in the first region 151 of the current collector 15 in which neither the active material layer nor the sealing material 21 is provided, and rigidity is secured for the power storage module. Therefore, even when some force is generated in the power storage module 1, deformation of the current collector 15 is suppressed.

In the power storage module 1 according to the present embodiment, the following effects can also be achieved. That is, in the bipolar battery described in Patent Literature 1 above, the following problems may occur. For example, when a temperature change occurs in the bipolar battery, a force is applied to the current collector due to a difference in thermal expansion coefficient between the current collector and the seal layer, and wrinkles (deformation) may occur in the current collector in a region having relatively low rigidity. Further, when another member (for example, a liquid injection member used for injecting an electrolytic solution) is formed on the outer side surface of the seal layer by injection molding, a force is applied to the bipolar battery in a direction perpendicular to the lamination direction. As a result, wrinkles may occur in the region having relatively low rigidity. Further, for example, when the internal space is depressurized, there is a possibility that wrinkles may occur in the region or the internal space may fluctuate in accordance with deformation of the current collector. In contrast, according to the power storage module 1 according to the present embodiment, the above-described problems can be solved by suppressing deformation of the current collector as described above.

Here, the overlapping portion 22r of the spacers 22 other than the outermost spacer 22 in the Z direction (the spacers 22 in the intermediate portion) is disposed in a region corresponding to the thickness of the positive electrode active material layer 16 between the negative electrode active material layer 17 of one bipolar electrode 11 and the current collector 15 of another bipolar electrode 11 adjacent to the one bipolar electrode 11. In contrast, in the power storage module 1 according to the present embodiment, the spacer 22 is made thinner than the positive electrode active material layer 16 at least in the overlapping portion 22r. That is, the thickness Ts in the Z direction of the spacer 22 in the overlapping portion 22r is made thinner than the thickness Tp of the positive electrode active material layer 16 in the Z direction. Thereby, the spacer 22 in the intermediate portion can be configured not to contact the current collector 15 of another bipolar electrode 11 at least in the overlapping portion 22r (in the entire portion in the present embodiment). In this case, even when the active material layer expands, the spacer 22 in the intermediate portion can be configured not to contact the current collector 15 of another bipolar electrode 11. The outermost spacer 22 in the Z direction can contact the current collector 15 of the positive electrode terminal electrode 13 at least in the overlapping portion 22r.

Further, in the power storage module 1 according to the present embodiment, the outer edge portion of the sealing material 21 and the outer edge portion of the spacer 22 are welded to each other to constitute the welded portion 23. Therefore, the internal space S is reliably sealed. Further, the spacer 22 is reliably supported between the sealing materials 21 adjacent to each other in the Z direction.

Further, in the power storage module 1 according to the present embodiment, the current collector 15 includes the first region 151 that does not overlap the negative electrode active material layer 17 and the sealing material 21 when viewed from the Z direction, and the second region 152 that overlaps the negative electrode active material layer 17 when viewed from the Z direction and does not overlap the positive electrode active material layer 16. That is, the one surface 15a and the other surface 15b of the current collector 15 include regions exposed to the internal space S. The width W1 of the first region 151 when viewed from the Z direction is narrower than the width W2 of the second region 152 when viewed from the Z direction. Therefore, since the width of the first region 151 (the region in which neither the active material layer nor the sealing material 21 is provided) having relatively low rigidity in the current collector 15 becomes narrower, the rigidity is further improved.

Further, in the power storage module 1 according to the present embodiment, the electrode laminate 10 includes the first laminated portion 101 in which the negative electrode active material layer 17 and the positive electrode active material layer 16 overlap when viewed from the Z direction, and the second laminated portion 102 that is outside the positive electrode active material layer 16 when viewed from the Z direction and in which the negative electrode active material layer 17 and the spacer 22 overlap. Further, the sealing body 20 includes the first sealing portion 201 in which the sealing material 21 and the spacer 22 overlap when viewed from the Z direction. The thickness of the second laminated portion 102 in the Z direction is smaller than the thickness of the first laminated portion 101 in the Z direction, and the thickness of the first sealing portion 201 in the Z direction is smaller than the thickness of the second laminated portion 102 in the Z direction. Thus, in the power storage module 1, the thickness is made thinner in the order of the first laminated portion 101 in which the negative electrode active material layer 17 and the positive electrode active material layer 16 are provided, the second laminated portion 102 in which only the negative electrode active material layer 17 is provided and the spacer 22 overlaps the negative electrode active material layer 17, and the first sealing portion 201 in which the sealing material 21 and the spacer 22 are provided. Therefore, a rapid change in thickness with respect to a change in position in the current collector 15 is suppressed.

The above embodiment has described one form of the power storage module according to the present invention. Therefore, the power storage module according to the present invention is not limited to the above-described embodiment, and can be arbitrarily modified. Modified examples will be described below.

### [First Modified Example]

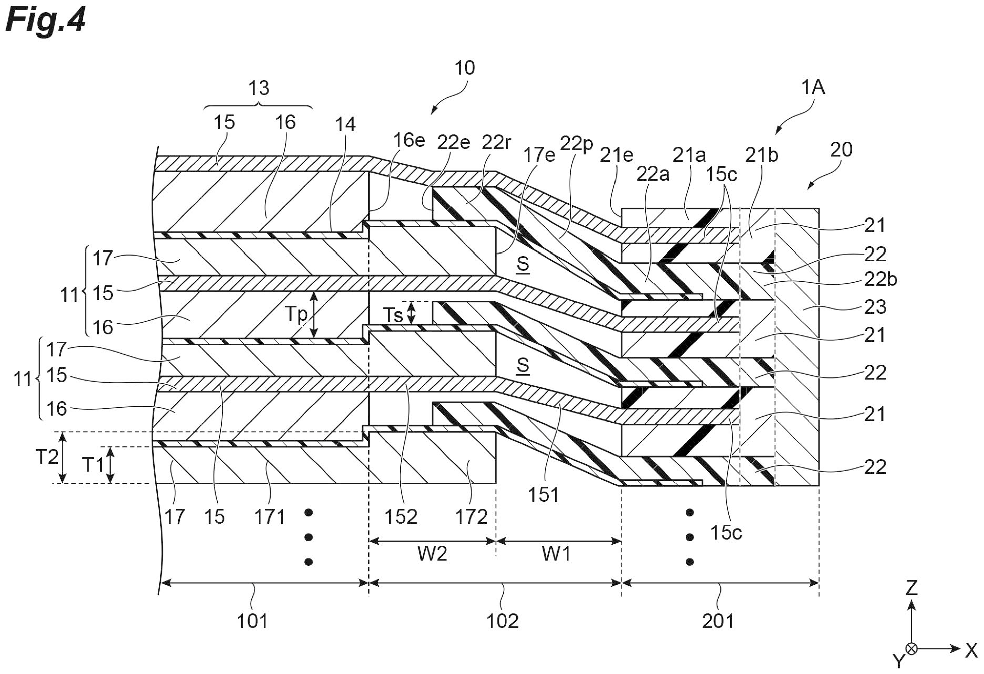

FIG. 4 is a schematic cross-sectional view showing an enlarged part of a power storage module according to a first modified example. As shown in FIG. 4, a power storage module 1A according to the first modified example differs from the power storage module 1 according to the above embodiment in that the thickness T2 of the second portion 172 of the negative electrode active material layer 17 in the Z direction is made greater than the thickness T1 of the first portion 171 of the negative electrode active material layer 17 in the Z direction, and is the same in other respects. In the first modified example, when viewed from the Z direction, an outer edge of the first portion 171 of the negative electrode active material layer 17 and an outer edge of the positive electrode active material layer 16 provided on the one surface 15a of the current collector 15 of the bipolar electrode 11 on which the negative electrode active material layer 17 is provided overlap. That is, in the first modified example, when the bipolar electrodes 11 are laminated along the Z direction, the negative electrode active material layer 17 is recessed such that the positive electrode active material layer 16 enters the first portion 171 of the negative electrode active material layer 17 along the Z direction. Thereby, when viewed from the Z direction, since the positive electrode active material layer 16 is surrounded by the relatively thick portion (the second portion 172) of the negative electrode active material layer 17, the bipolar electrode 11 can be positioned in a plane intersecting the Z direction.

Further, in the first modified example, the inner edge 22e of the spacer 22 overlaps the relatively thick portion (the second portion 172) of the negative electrode active material layer 17. Also in the first modified example, the thickness Ts of the spacer 22 in the Z direction is made thinner than the thickness Tp of the positive electrode active material layer 16 in the Z direction so that the spacer 22 in the intermediate portion does not contact the current collectors 15 of the adjacent bipolar electrodes 11 in the overlapping portion 22r. Further, in the Z direction, a total thickness of the thickness T2 of the second portion 172 of the negative electrode active material layer 17 and the thickness Ts of the spacer 22 in the overlapping portion 22r is smaller than a total thickness of the thickness T1 of the first portion 171 of the negative electrode active material layer 17 and the thickness Tp of the positive electrode active material layer 16. Therefore, even when the relatively thick second portion 172 is provided for the negative electrode active material layer 17 as in the first modified example, even when the active material layer expands, the spacer 22 in the intermediate portion does not contact the current collector 15 facing the spacer 22 on the positive electrode active material layer 16 side.

### [Second Modified Example]

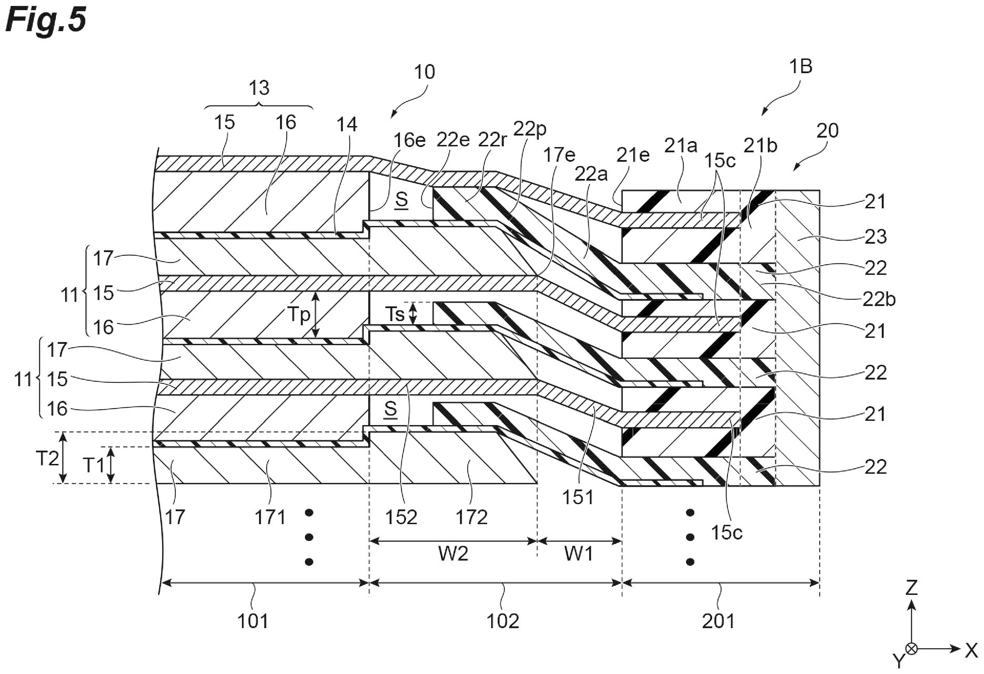

FIG. 5 is a schematic cross-sectional view showing an enlarged part of a power storage module according to a second modified example. As shown in FIG. 5, a power storage module 1B according to the second modified example differs from the power storage module 1A according to the first modified example in that the negative electrode active material layer 17 has a tapered portion 17p, and is the same in other respects. The tapered portion 17p is an outer edge portion including the outer edge 17e of the negative electrode active material layer 17. In the tapered portion 17p, the thickness in the Z direction is gradually reduced by an inclined surface that is inclined so as to go toward the other surface 15b of the current collector 15 on which the negative electrode active material layer 17 is provided, from the center side of the negative electrode active material layer 17 toward the outer edge 17e.

According to the power storage module 1B according to such a second modified example, a corner portion of the negative electrode active material layer 17 facing the spacer 22 via the separator 14 is in a chamfered state. Therefore, the inclination of a portion of the spacer 22 that contacts the tapered portion 17p via the separator 14 becomes gentle, and damage to the portion of the spacer 22 by contacting a sharper corner portion of the negative electrode active material layer 17 is suppressed.

### [Third Modified Example]

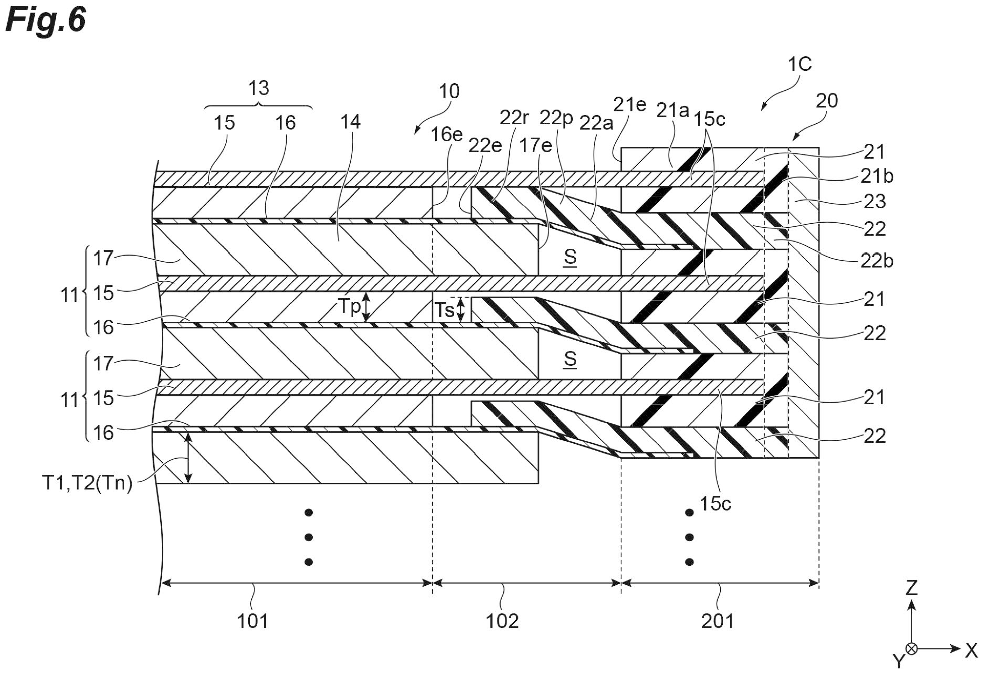

FIG. 6 is a schematic cross-sectional view showing an enlarged part of a power storage module according to a third modified example. As shown in FIG. 6, a power storage module 1C according to the third modified example differs from the power storage module 1 according to the above embodiment in that the thickness of the first laminated portion 101 in the Z direction, the thickness of the second laminated portion 102 in the Z direction, and the thickness of the first sealing portion 201 in the Z direction are made substantially the same, and is the same in other respects.

Thus, the thicknesses of the first laminated portion 101, the second laminated portion 102, and the first sealing portion 201 in the Z direction are not limited to being changed so as to become thinner in order as in the power storage module 1 according to the above embodiment (in the case of two steps), and may be constant (in the case of zero steps) as in the power storage module 1B.

Further, the thicknesses of the first laminated portion 101, the second laminated portion 102, and the first sealing portion 201 in the Z direction are not limited to the above examples, and for example, the thickness of the first laminated portion 101 in the Z direction and the thickness of the second laminated portion 102 in the Z direction may be made substantially the same, and the thickness of the first sealing portion 201 in the Z direction may be made smaller than the thicknesses of the first laminated portion 101 and the second laminated portion 102 in the Z direction (an aspect having one step).

### [Fourth Modified Example]

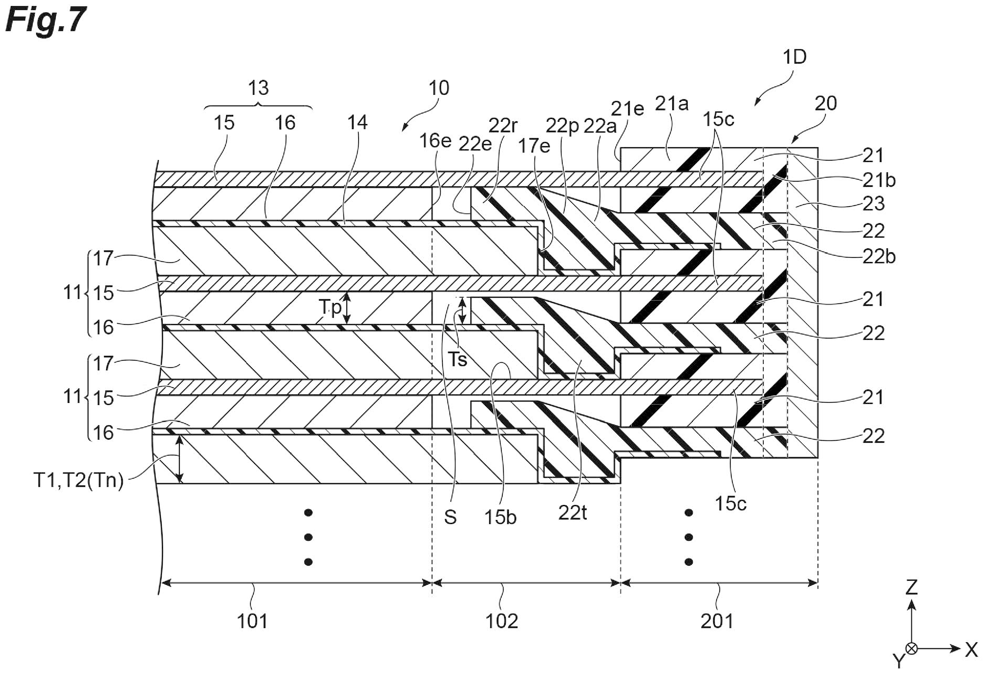

FIG. 7 is a schematic cross-sectional view showing an enlarged part of a power storage module according to a fourth modified example. As shown in FIG. 7, a power storage module 1D according to the fourth modified example differs from the power storage module 1C according to the third modified example in that the spacer 22 includes a protruding portion 22t, and is the same in other respects. The protruding portion 22t protrudes toward the other surface 15b side of the current collector 15 facing the spacer 22 in a region between the outer edge 17e of the negative electrode active material layer 17 and the inner edge 21e of the sealing material 21 when viewed from the Z direction (that is, the first region 151). A thickness of the protruding portion 22t in the Z direction is made greater than the thickness Ts of the spacer 22 in the overlapping portion 22r in the Z direction.

More specifically, the protruding portion 22t of one spacer 22 protrudes toward the other surface 15b of the current collector 15 on which the negative electrode active material layer 17 with which the one spacer 22 contacts via the separator 14 is provided. A top surface of the protruding portion 22t may be in contact with the other surface 15b via the separator 14, or may be separated from the other surface 15b by a distance equal to or greater than the thickness of the separator 14. According to the power storage module 1D according to the fourth modified example, it is possible to support the region (the first region 151) of the current collector 15 in which neither the active material layer nor the sealing material 21 is provided by the protruding portion 22t of the spacer 22. Thereby, it is possible to more reliably suppress wrinkles from occurring in the current collector 15 in the first region 151.

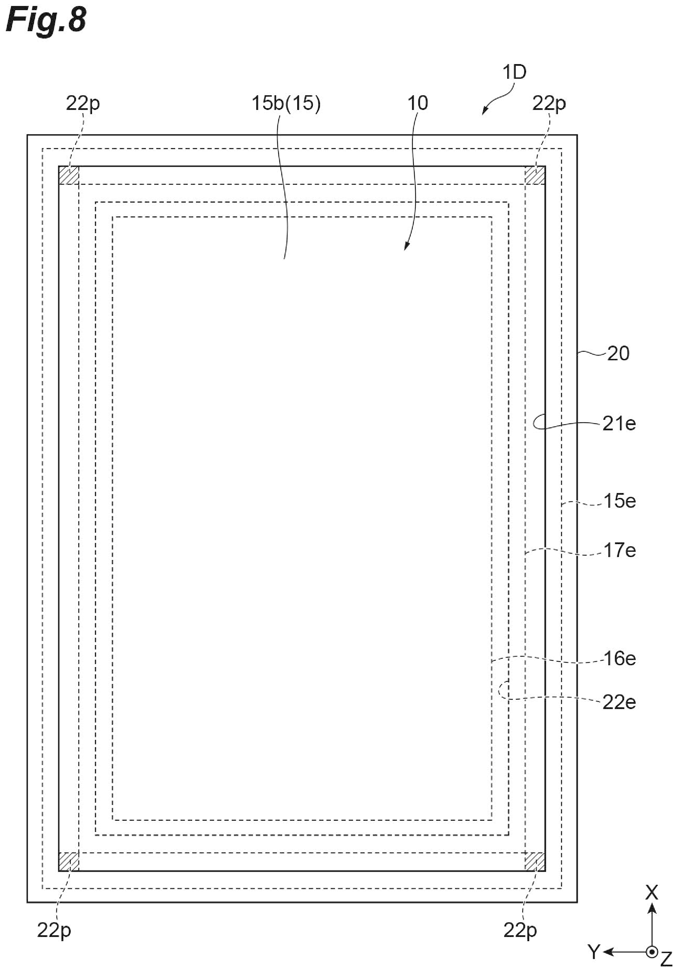

Various aspects can be adopted for a formation range of the protruding portion 22t when viewed from the Z direction. As one example, as shown in FIG. 8, the protruding portion 22t may be provided only at locations facing each of four corner portions of a region between the outer edge 17e of the negative electrode active material layer 17 and the inner edge 21e of the sealing material 21 (the rectangular annular first region 151 of the current collector 15) when viewed from the Z direction.

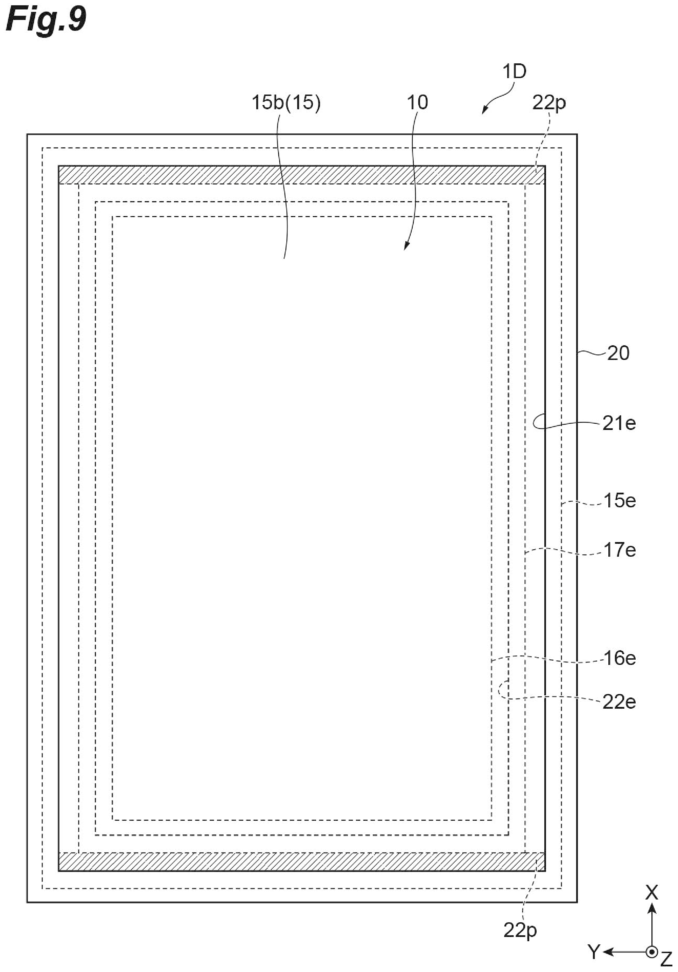

Alternatively, as shown in FIG. 9, the protruding portion 22t may be provided only at locations facing each of two side portions (here, short side portions) of a region between the outer edge 17e of the negative electrode active material layer 17 and the inner edge 21e of the sealing material 21 (the rectangular annular first region 151 of the current collector 15) when viewed from the Z direction.

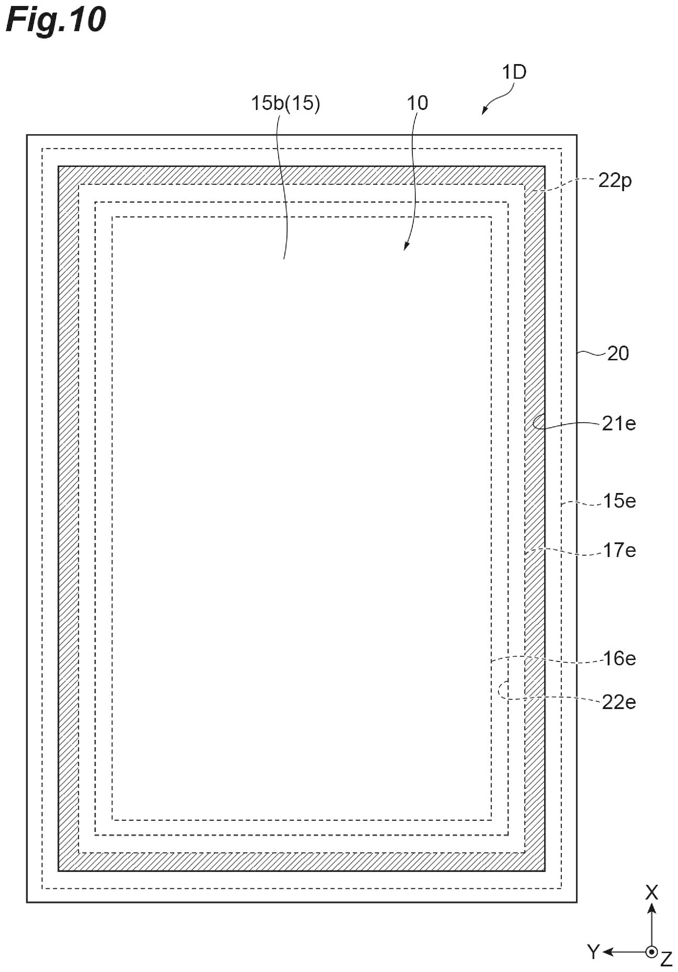

Further, as shown in FIG. 10, the protruding portion 22t may be provided over the entire region between the outer edge 17e of the negative electrode active material layer 17 and the inner edge 21e of the sealing material 21 (the rectangular annular first region 151 of the current collector 15) when viewed from the Z direction.

### [Other Modified Examples]

In the above embodiment, an example has been described in which the width W1 of the first region 151 of the current collector 15 when viewed from the Z direction is made narrower than the width W2 of the second region 152 of the current collector 15 when viewed from the Z direction. However, the width W1 of the first region 151 when viewed from the Z direction and the width W2 of the second region 152 when viewed from the Z direction may be the same, or the width W1 of the first region 151 when viewed from the Z direction may be wider than the width W2 of the second region 152 when viewed from the Z direction.

Further, in the above embodiment, an example has been described in which the outermost spacer 22 in the Z direction is in contact with the current collector 15 of the positive electrode terminal electrode 13 in the overlapping portion 22r, but the spacer 22 may not be in contact with the current collector 15 of the positive electrode terminal electrode 13 in the overlapping portion 22r.

Further, it is possible to arbitrarily apply each element of the power storage module 1 according to the above embodiment and each element of the power storage modules 1A to 1D according to each modified example to each other. As one example, the protruding portion 22t of the spacer 22 according to the fourth modified example may be applied to the power storage module 1 according to the above embodiment or the power storage module according to another modified example. Further, the tapered portion 17p of the negative electrode active material layer 17 according to the second modified example may be applied to the negative electrode active material layer 17 of the power storage module 1 according to the above embodiment, the power storage module 1C according to the third modified example, or the power storage module 1D according to the fourth modified example.

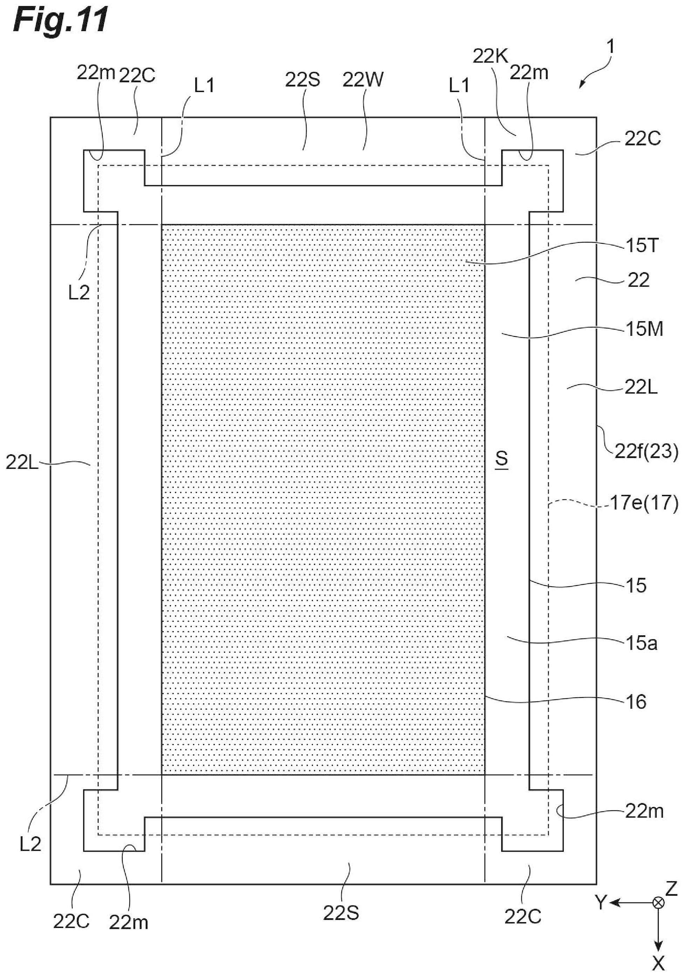

Here, FIG. 11 is a schematic plan view of a power storage module 1 according to another modified example. FIG. 11 is a plan view when the bipolar electrode 11 and the spacer 22 according to the modified example are viewed from the one surface 15a (second surface) side of the current collector 15 of the bipolar electrode 11. As shown in FIG. 11, the one surface 15a of the current collector 15 of the bipolar electrode 11 is divided into a rectangular first region 15T in which the positive electrode active material layer 16 is formed, and a second region 15M outside the first region 15T. In this case, the spacer 22 can be divided by an extension line L1 (first dividing line) of long sides (first sides) of the first region 15T and an extension line L2 (second dividing line) of short sides (second sides). The spacer 22 is divided into: short side portions (first sections) 22S partitioned by the pair of extension lines L1 and along the short sides; long side portions (second sections) 22L partitioned by the pair of extension lines L2 and along the long sides; and corner portions (third sections) 22C partitioned by the extension lines L1 and the extension lines L2 and connecting the long side portions 22L and the short side portions 22S.

A notch-shaped portion 22m is formed in at least one corner portion 22C of the spacer 22. In the illustrated example, the notch-shaped portion 22m is formed in four corner portions 22C. The notch-shaped portion may be a region having a shape that is cut or excised in the spacer 22 having a rectangular frame shape defined by a rectangular inner edge and outer edge when viewed from the lamination direction (Z direction).

In other words, when viewed from the lamination direction, at least one side of the spacer 22 may include a wide portion 22W having a large width direction length, and a notch-shaped portion 22K having a width direction length smaller than that of the wide portion 22W. The width direction length may be a length in a width direction orthogonal to a longitudinal direction of the side in each side of the spacer 22. That is, the width direction length in the short side portion 22S is a length in the X direction, and the width direction length in the long side portion 22L is a length in the Y direction. When a cut-out portion such as a hole is formed in the spacer 22, the width direction length of the spacer 22 may be defined as a length obtained by subtracting the length of the cut-out portion from the length from the inner edge to the outer edge. In the following description, the "width direction length" may be simply referred to as "width".

The notch-shaped portion 22m has a notched shape in which the width direction length of the spacer 22 becomes narrower from the inner edge of the spacer 22 toward the outer edge. The notch-shaped portion 22m may be formed in a region other than the welded portion 23 of the spacer 22, and is provided in a region where at least the spacer 22 and the negative electrode active material layer 17 overlap when viewed from the lamination direction. That is, when viewed from the lamination direction, the notch-shaped portion 22m and the welded portion 23 may not overlap each other. One example of the notch-shaped portion 22m has a quadrangular shape including corners of the inner edge in the corner portions 22C of the spacer 22. That is, the inner edge of a rectangular frame-shaped spacer originally has a rectangular shape having four corners, but the inner edge of the spacer 22 shown in FIG. 11 has a shape in which four corners of the inner edge are cut off by the notch-shaped portions 22m. In the present modified example, the notch-shaped portion 22m may be provided inside the outer edge of the current collector 15 when viewed from the lamination direction, so that the notch-shaped portion 22m may not reach the welded portion 23.

As described above, in the present modified example, the spacer 22 has a rectangular frame shape when viewed from the Z direction, and the current collector 15 has, on the one surface 15a, when viewed from the Z direction, the rectangular first region 15T in which the positive electrode active material layer 16 is provided, and the rectangular frame-shaped second region 15M that is outside the first region 15T. Further, an outer edge of the rectangular first region 15T is defined by a pair of first sides (long sides) facing each other and second sides (short sides) connecting the pair of first sides and facing each other. Further, when the spacer 22 is divided, when viewed from the Z direction, by first dividing lines (extension lines L1) extending the pair of first sides and second dividing lines (extension lines L2) extending the pair of second sides, the spacer 22 is divided into: a pair of first sections (short side portions 22S) partitioned by the first dividing lines and along the pair of second sides; a pair of second sections (long side portions 22L) partitioned by the second dividing lines and along the first sides; and four third sections (corner portions 22C) partitioned by the first dividing lines and the second dividing lines, connecting the first sections and the second sections, and including four corner portions of the spacer 2. At least one of the plurality of spacers 22 includes, in at least one third section, a notch-shaped portion 22m formed such that a width direction length of the spacer 22 from an outer edge 22f of the spacer 22 to the internal space S is shorter than the width direction length of the spacer 22 in an adjacent first section or second section.

Thereby, in the notch-shaped portion 22m, a region near the outer edge 17e of the negative electrode active material layer 17 can be exposed from the spacer 22. Corner portions of the spacer 22 can be a portion that becomes relatively thick when, for example, a plurality of rectangular (strip-shaped) base materials are arranged so as to form a rectangular frame shape to constitute the spacer 22, and a longitudinal end portion of one base material and a longitudinal end portion of another base material overlap. In contrast, in the example shown in FIG. 11, by providing the notch-shaped portion 22m at the corner portion which is a portion that can become thick in this way, protrusion of the spacer 22 in the Z direction at the portion, that is, occurrence of a step in the power storage module 1 due to protrusion of the spacer 22 in the Z direction is suppressed.

As one example of a method of forming the notch-shaped portion 22m, a method of providing a notch in advance in a portion where the base materials overlap each other and then arranging the base materials in a rectangular frame shape to constitute the spacer 22, a method of providing a notch in the overlapping portion after arranging the base materials in a rectangular frame shape, or any other method can be adopted. When the notch-shaped portion 22m is formed before welding of the spacer 22 as described above, resin may enter the notch-shaped portion 22m during welding of the spacer 22. Even in this case, compared to a case where the notch-shaped portion 22m is not formed in the spacer 22, protrusion of the spacer 22 in the Z direction can be suppressed.

The above embodiments are additionally described as follows.

A power storage module according to [First Supplementary Note] is "a power storage module comprising: an electrode laminate in which a plurality of electrodes including a plurality of bipolar electrodes are laminated along a first direction; and a sealing body that is provided in the electrode laminate and that seals the electrode laminate, wherein each of the plurality of bipolar electrodes includes: a current collector including a first surface intersecting the first direction and a second surface on a side opposite to the first surface; a first active material layer provided on the first surface; and a second active material layer provided on the second surface and having a polarity different from that of the first active material layer, wherein the sealing body includes: a plurality of sealing materials laminated along the first direction; and a plurality of spacers interposed between the sealing materials adjacent to each other along the first direction, wherein each of the plurality of sealing materials is formed in a frame shape along an outer shape of the current collector when viewed from the first direction, and is welded to the first surface and the second surface at a peripheral portion of the current collector, wherein each of the plurality of spacers is formed in a frame shape along the outer shape of the current collector when viewed from the first direction, and forms an internal space between the current collectors adjacent to each other in the first direction together with the sealing materials adjacent to each other along the first direction, wherein, when viewed from the first direction, an outer edge of the first active material layer is positioned outside an outer edge of the second active material layer, and wherein the spacer, when viewed from the first direction, has its inner edge positioned between the outer edge of the first active material layer and the outer edge of the second active material layer."

A power storage module according to [Second Supplementary Note] may be "the power storage module according to the first supplementary note, wherein the spacer includes an overlapping portion that overlaps the first active material layer when viewed from the first direction, and is made thinner than the second active material layer in the overlapping portion."

A power storage module according to [Third Supplementary Note] may be "the power storage module according to the first or second supplementary note, wherein the spacer includes an overlapping portion that overlaps the first active material layer when viewed from the first direction, wherein the plurality of electrodes include a first terminal electrode that is positioned at an outermost part of the electrode laminate in the first direction and that includes the current collector and the second active material layer provided on the second surface, and wherein an outermost spacer of the plurality of spacers in the first direction is in contact with the current collector of the first terminal electrode in the overlapping portion."

A power storage module according to [Fourth Supplementary Note] may be "the power storage module according to any one of the first to third supplementary notes, wherein the first active material layer includes: a first portion that overlaps the second active material layer when viewed from the first direction; and a second portion that is positioned outside the outer edge of the second active material layer when viewed from the first direction and that includes the outer edge of the first active material layer, and wherein a thickness of the second portion in the first direction is greater than a thickness of the first portion in the first direction."

A power storage module according to [Fifth Supplementary Note] may be "the power storage module according to any one of the first to fourth supplementary notes, wherein an outer edge portion of the sealing material and an outer edge portion of the spacer are welded to each other to constitute a welded portion."

A power storage module according to [Sixth Supplementary Note] may be "the power storage module according to any one of the first to fifth supplementary notes, wherein the current collector includes: a first region that does not overlap the first active material layer and the sealing material when viewed from the first direction; and a second region that overlaps the first active material layer when viewed from the first direction and does not overlap the second active material layer, and wherein a width of the first region when viewed from the first direction is narrower than a width of the second region when viewed from the first direction."

A power storage module according to [Seventh Supplementary Note] may be "the power storage module according to any one of the first to sixth supplementary notes, wherein the electrode laminate includes: a first laminated portion in which the first active material layer and the second active material layer overlap when viewed from the first direction; and a second laminated portion that is outside the second active material layer when viewed from the first direction and in which the first active material layer and the spacer overlap, wherein the sealing body includes a first sealing portion in which the sealing material and the spacer overlap when viewed from the first direction, wherein a thickness of the second laminated portion in the first direction is smaller than a thickness of the first laminated portion in the first direction, and wherein a thickness of the first sealing portion in the first direction is smaller than the thickness of the second laminated portion in the first direction."

A power storage module according to [Eighth Supplementary Note] may be "the power storage module according to any one of the first to seventh supplementary notes, wherein the spacer includes a protruding portion that protrudes toward the first surface side facing the spacer between the outer edge of the first active material layer and an inner edge of the sealing material when viewed from the first direction."

A power storage module according to [Ninth Supplementary Note] may be "the power storage module according to any one of the first to eighth supplementary notes, wherein the spacer has a rectangular frame shape when viewed from the first direction, wherein the current collector has, on the second surface, when viewed from the first direction, a rectangular first region in which the second active material layer is provided, and a rectangular frame-shaped second region that is outside the first region, wherein an outer edge of the rectangular first region is defined by a pair of first sides facing each other and second sides connecting the pair of first sides and facing each other, wherein, when the spacer is divided, when viewed from the first direction, by first dividing lines extending the pair of first sides and second dividing lines extending the pair of second sides, the spacer is divided into: a pair of first sections partitioned by the first dividing lines and along the pair of second sides; a pair of second sections partitioned by the second dividing lines and along the first sides; and four third sections partitioned by the first dividing lines and the second dividing lines, connecting the first sections and the second sections, and including four corner portions of the spacer, and wherein at least one of the plurality of spacers includes, in at least one third section, a notch-shaped portion formed such that a width direction length of the spacer from an outer edge of the spacer to the internal space is shorter than the width direction length of the spacer in an adjacent first section or second section."

### Reference Signs List

1, 1A, 1B, 1C Power storage module, 10 Electrode laminate, 11 Bipolar electrode, 15 Current collector, 15a One surface (second surface), 15b Other surface (first surface), 16 Positive electrode active material layer (second active material layer), 16e Outer edge, 17 Negative electrode active material layer (first active material layer), 17e Outer edge, 20 Sealing body, 21 Sealing material, 21e Inner edge, 22 Spacer, 22e Inner edge, 22t Protruding portion, 22r Overlapping portion, 23 Welded portion, 101 First laminated portion, 102 Second laminated portion, 151 First region, 152 Second region, 171 First portion, 172 Second portion, 201 First sealing portion, S Internal space

## Claims

1. A power storage module comprising:
an electrode laminate in which a plurality of electrodes including a plurality of bipolar electrodes are laminated along a first direction; and
a sealing body that is provided in the electrode laminate and that seals the electrode laminate,
wherein each of the plurality of bipolar electrodes includes:
a current collector including a first surface intersecting the first direction and a second surface on a side opposite to the first surface;
a first active material layer provided on the first surface; and
a second active material layer provided on the second surface and having a polarity different from that of the first active material layer,
the sealing body includes:
a plurality of sealing materials laminated along the first direction; and
a plurality of spacers interposed between the sealing materials adjacent to each other along the first direction,
each of the plurality of sealing materials is formed in a frame shape along an outer shape of the current collector when viewed from the first direction, and is welded to the first surface and the second surface at a peripheral portion of the current collector,
each of the plurality of spacers is formed in a frame shape along the outer shape of the current collector when viewed from the first direction, and forms an internal space between the current collectors adjacent to each other in the first direction together with the sealing materials adjacent to each other along the first direction,
when viewed from the first direction, an outer edge of the first active material layer is positioned outside an outer edge of the second active material layer, and
the spacer, when viewed from the first direction, has its inner edge positioned between the outer edge of the first active material layer and the outer edge of the second active material layer.

2. The power storage module according to claim 1, wherein the spacer includes an overlapping portion that overlaps the first active material layer when viewed from the first direction, and is made thinner than the second active material layer in the overlapping portion.

3. The power storage module according to claim 1 or 2, wherein
the spacer includes an overlapping portion that overlaps the first active material layer when viewed from the first direction,
the plurality of electrodes include a first terminal electrode that is positioned at an outermost part of the electrode laminate in the first direction and that includes the current collector and the second active material layer provided on the second surface, and
an outermost spacer of the plurality of spacers in the first direction is in contact with the current collector of the first terminal electrode in the overlapping portion.

4. The power storage module according to any one of claims 1 to 3, wherein
the first active material layer includes:
a first portion that overlaps the second active material layer when viewed from the first direction; and
a second portion that is positioned outside the outer edge of the second active material layer when viewed from the first direction and that includes the outer edge of the first active material layer, and
a thickness of the second portion in the first direction is greater than a thickness of the first portion in the first direction.

5. The power storage module according to any one of claims 1 to 4, wherein an outer edge portion of the sealing material and an outer edge portion of the spacer are welded to each other to constitute a welded portion.

6. The power storage module according to any one of claims 1 to 5, wherein
the current collector includes:
a first region that does not overlap the first active material layer and the sealing material when viewed from the first direction; and
a second region that overlaps the first active material layer when viewed from the first direction and does not overlap the second active material layer, and
a width of the first region when viewed from the first direction is narrower than a width of the second region when viewed from the first direction.

7. The power storage module according to any one of claims 1 to 6, wherein
the electrode laminate includes:
a first laminated portion in which the first active material layer and the second active material layer overlap when viewed from the first direction; and
a second laminated portion that is outside the second active material layer when viewed from the first direction and in which the first active material layer and the spacer overlap,
the sealing body includes a first sealing portion in which the sealing material and the spacer overlap when viewed from the first direction,
a thickness of the second laminated portion in the first direction is smaller than a thickness of the first laminated portion in the first direction, and
a thickness of the first sealing portion in the first direction is smaller than the thickness of the second laminated portion in the first direction.

8. The power storage module according to any one of claims 1 to 7, wherein
the spacer includes a protruding portion that protrudes toward the first surface side facing the spacer between the outer edge of the first active material layer and an inner edge of the sealing material when viewed from the first direction.

9. The power storage module according to any one of claims 1 to 8, wherein
the spacer has a rectangular frame shape when viewed from the first direction,
the current collector has, on the second surface, when viewed from the first direction, a rectangular first region in which the second active material layer is provided, and a rectangular frame-shaped second region that is outside the first region,
an outer edge of the rectangular first region is defined by a pair of first sides facing each other and second sides connecting the pair of first sides and facing each other,
when the spacer is divided, when viewed from the first direction, by first dividing lines extending the pair of first sides and second dividing lines extending the pair of second sides, the spacer is divided into: a pair of first sections partitioned by the first dividing lines and along the pair of second sides; a pair of second sections partitioned by the second dividing lines and along the first sides; and four third sections partitioned by the first dividing lines and the second dividing lines, connecting the first sections and the second sections, and including four corner portions of the spacer, and
at least one of the plurality of spacers includes, in at least one third section, a notch-shaped portion formed such that a width direction length of the spacer from an outer edge of the spacer to the internal space is shorter than the width direction length of the spacer in an adjacent first section or second section.
